# EUROPEAN PATENT APPLICATION

(11) **EP 3 949 752 A1**
(43) Date of publication of application: **09.02.2022**
(21) Application number: 20382722.5
(22) Date of filing: 03.08.2020
(51) Int. Cl.: A23L 3/18, A23L 19/00

(54) **METHOD FOR OBTAINING FRUITS AND/OR VEGETABLES WITH HIGH DURABILITY**

(71) Applicant: Reel Innovation SL, 30005 Murcia (ES)
(72) Inventor: GOMEZ GOMEZ, Enrique, 30005 Murcia (ES); SAMPER HENARES, María Reyes, 30005 Murcia (ES); DEL MORAL MILLA, Paula, 30005 Murcia (ES)
(74) Representative: Carlos Hernando, Borja

(57) **Abstract**

The present invention is included within the production of packaged vegetable and/or fruit-based food products, which are highly nutritious and highly durable, as well as easy to handle and transport, being useful to combat malnutrition and undernutrition in the population. The invention specifically relates to a method for obtaining said packaged foods characterised in that it maintains a pasteurisation temperature during the steps of mixing the ingredients, packaging and until the cooling prior to the process of storing the final product.

## Description

### Field of the invention

The present invention is included within the production of packaged vegetable and/or fruit-based food products, which are highly nutritious and highly durable, being useful to combat malnutrition and undernutrition in the population.

### Background

According to the WHO, malnutrition refers to deficiencies, excesses or imbalances in a person's intake of energy and/or nutrients. The term malnutrition addresses two broad groups of conditions. One group is "undernutrition", which comprises the stunting of growth (low height for what corresponds to the person's age), wasting (low weight for what corresponds to the person's height), underweight (low weight for what corresponds to the person's age) and micronutrient deficiencies or insufficiencies (a lack of important vitamins and minerals). The other group is overweight, obesity and diet-related noncommunicable diseases (heart disease, strokes, diabetes and cancers).

Malnutrition affects people in all countries. About 1.9 billion adults are overweight, while 462 million are underweight. An estimated 41 million children under 5 years of age are overweight or obese, 159 million are stunted, and 50 million are wasted. To this burden, 528 million women (29 %) of reproductive age who suffer from anaemia must be added, half of whom could be treated with iron supplements.

Many families do not have the resources to buy enough nutritious food, like fresh fruits and vegetables, pulses, meat or milk, or do not have access to them, while foods rich in fats, sugar and salt are cheaper and more easily acquired, which promotes the rapid increase in overweight and obesity among children and adults, in both rich and poor countries.

Indeed, malnutrition in any form presents considerable risks to human health. Undernutrition contributes to about one third of all deaths among children. The increasing rates of overweight and obesity worldwide are associated with an increase in chronic diseases such as cancer, cardiovascular diseases and diabetes. These diseases increasingly affect the poor and the most vulnerable groups.

In order to tackle this social problem, there are many proposals and technical solutions developed by companies and governments. Nevertheless, the packaged food products intended for these purposes and known in the state of the art do not exceed the technical requirements necessary for the suitable and effective use thereof.

WO2007064185 describes a method for obtaining fruit creams packaged in glass jars, comprising: a) selecting the fruit in a green to ripe state, regardless of the size, b) washing the fruit with chlorinated tap water, c) crushing the fruit and pitting it, d) sieving the fruit, e) sterilising the cream/pulp of the fruit, f) adding ingredients, g) homogenising the ingredients in order to form an emulsion, h) raising the temperature of the emulsion, and i) packaging the emulsion.

Spanish patent ES 2561613 relates to a method for making a stable fruit-based purée composition, comprising the step of adding to a stabilised fruit pulp composition a composition comprising a thickening base in order to produce a stable purée composition. The product of this invention has a shelf life of at least 65 days at approximately room temperature.

Spanish patent ES 2537072 describes a method for enhancing food safety and longevity of fresh fruit and/or fresh vegetables, which has been reduced mechanically to thereby provide a food product which is, at least partly, still substantially fresh, method comprising or including at least (1) washing the mechanically reduced food product; (2) subjecting at least any mechanically altered surface of the mechanically reduced product to UV light and (3) subjecting the mechanically reduced food product to sub-lethal heating (not exceeding 60 °C) in an aqueous environment, such that the heating reduces ethylene production and decreases, but does not stop, the respiration of the food product, wherein steps (2) and (3) can be performed in any order or simultaneously. The products thus obtained have a shelf life of 25 days stored at room temperature.

Spanish patent ES2445321 relates to a method for manufacturing a packaged edible product, comprising: a) obtaining an aqueous mixture comprising pulp from tamarind fruit (*Tamarindus nilotica*) and nebneb fruits (*Acacia nilotica*), b) adjusting the pH of the aqueous mixture obtained in this manner to a value comprised between 3.6 and 4.8, adding a weak organic acid, c) cooking said mixture at a temperature above approximately 80 °C, d) adjusting the pH of the resulting mixture to a value comprised between 3.6 and 4.8, adding a weak organic acid, e) cooling the cooked mixture to a temperature of at least approximately 65 °C, f) packaging and hermetically sealing the mixture obtained in this manner, and g) pasteurising the resulting hermetically sealed packaging at a temperature of approximately 92 °C, with the aim of obtaining a packaged edible product, the duration of which at room temperature is estimated to be up to 120 days.

Therefore, there is a need to provide packaged foods with high nutritional value and higher durability, which are easy to handle and transport and which can be administered to remote populations affected by malnutrition.

The present invention relates to a method for obtaining packaged fruit and/or vegetable-based foods, which, unlike the methods known in the state of the art, eliminates the exposure of the product to room temperature prior to the packaging thereof, such that the resulting product has a high nutritional value and a much higher durability, which facilitates the handling, storage and transport thereof.

### Description of the invention

The present invention relates to a method for obtaining a packaged fruit and/or vegetable-based food product characterised in that it maintains a certain pasteurisation temperature during the steps of: mixing the ingredients and packaging until the cooling of the final product, such that the product is not exposed to room temperature before being packaged. This feature of the method of the present invention in combination with other features of the method provides substantial advantages in the packaged product resulting from the process.

The present invention also relates to the product resulting from the method of the invention and relating to a packaged fruit and/or vegetable-based food, with high nutritional value and high durability, being easy to handle and transport.

In a particular embodiment, the present invention relates to a method for obtaining packaged fruit and/or vegetable products with improved nutritional and organoleptic properties.

In another particular embodiment, the present invention relates to a method for obtaining processed and packaged fruit and/or vegetable-based products, the durability of which at room temperature is at least two years.

In another particular embodiment, the present invention relates to a method for obtaining said products adapted for the consumption thereof in populations comprising from children of 3 years of age to adults of any age.

In another particular embodiment, the present invention relates to a method for obtaining packaged fruit and/or vegetable-based food products with improved or enriched nutritional and organoleptic properties which additionally comprise other nutrients such as: vegetable and/or animal proteins, dairy products, vegetable fibres, sugars, micronutrients and/or vitamins.

The fruit-based products of the present invention are free of chemical preservatives, additives or dyes and ultimately they are natural products in the form of or with the consistency of juice or purée or cream or fruit and/or vegetable purée with high nutritional power.

In another particular embodiment, the present invention relates to a method for obtaining a product as described in the preceding paragraphs which has a minimum durability of two years, which enables it to be used, by fulfilling suitable aseptic and sensory conditions, in remote places in order to combat famine or undernutrition of disadvantaged populations.

Therefore, a particular embodiment of the present invention relates to a method for obtaining a fruit and/or vegetable-based food product characterised in that it comprises the following steps:
a) Washing the fruit and/or vegetable.
b) Selecting the fruit and/or vegetable.
c) Washing on a conveyor belt.
d) Pitting and pulping.
e) Crushing the fruit and/or vegetable until a homogeneous mixture of product formed by fruit and/or vegetable is obtained, in the form of a liquid, cream, purée or fruit purée, with variable texture and consistency.
f) Sieving the homogeneous mixture obtained in the previous step by means of a stainless mesh filter (0.5-1.5 mm).
g) Enzymatic deactivation of the homogeneous mixture from the previous step through cooking at a temperature of 95-105 °C.
h) Deaerating the mixture by vacuum stirring at -0.3-0.6 bar.
i) Pasteurising the mixture at a temperature of 98-113 °C. Optionally, followed by packaging and storage.
j) Mixing and stirring the product obtained in step i) with the addition of an antioxidant and optionally other functional ingredients for each specific formulation, in the mixture preparation tanks.
k) Transferring the homogeneous fruit and/or vegetable mixture, optionally functionalised as obtained in step j), from the mixture preparation tanks to the packaging and closing area, through a closed tubular installation or tunnel wherein the room temperature is maintained controlled between 95 °C +/- 3 °C.
l) Packaging the product in the packaging and closing area at a room temperature of between 95 °C +/- 3 °C.
m) Pasteurising the packaged product at a temperature of 95 °C for 5-7 minutes.
n) Cooling the product; and
o) Drying and storing the final product.

A particular embodiment of the present invention is also a method as defined in the preceding paragraph, characterised in that in step j), the mixture is preheated to a temperature of 35-50 °C through steam jackets provided in the mixing tank.

A particular embodiment of the present invention is also a method as defined in the preceding paragraphs, characterised in that in step j), the mixture is stirred at about 2,500 rpm.

A particular embodiment of the present invention is also a method as defined in any of the preceding paragraphs, characterised in that in step j) ascorbic acid is added as an antioxidant in a proportion of 0.06 % by weight (i.e., 0.06 grams of ascorbic acid per 100 grams of finished product).

A particular embodiment of the present invention is also a method as defined in any of the preceding paragraphs, characterised in that in step j) other functional ingredients and/or mixtures thereof are added, selected from the group comprising: vegetable and/or animal proteins, dairy products, vegetable fibres, sugars, micronutrients or vitamins.

A particular embodiment of the present invention is also a method as defined in any of the preceding paragraphs, characterised in that in step k) the tubular installation connects the mixture preparation tanks to the packaging and closing area, preventing the fruit and/or vegetable mixture from coming into contact with room temperature or any other temperature other than a temperature between 95 °C +/- 3 °C.

A particular embodiment of the present invention is also a packaged fruit and/or vegetable-based food product comprising between 75-90 % by weight of fruit and/or vegetable with respect to the total weight of the product and optionally other functional ingredients and/or mixtures thereof, selected from the group comprising: vegetable and/or animal proteins, dairy products, vegetable fibres, sugars, micronutrients or vitamins.

A particular embodiment of the present invention is also a packaged food product as defined in the preceding paragraph, characterised in that it comprises in % by weight with respect to the total weight of the product:
0-10 % vegetable protein
0-20 % dairy product
0-8 % sugars; and
0-2 % vegetable fibres.

A particular embodiment of the present invention is also a packaged food product as defined in any of the preceding paragraphs, characterised in that it is presented in a form adapted for oral administration.

A particular embodiment of the present invention is also a packaged food product as defined in any of the preceding paragraphs, which is presented in a form selected from the group comprising: cream, purée, bound soup and fruit purée.

Additionally, a particular embodiment of the present invention is also a packaged food product as defined in any of the preceding paragraphs, characterised in that the fruits and/or vegetables can be selected from the group comprising flat peaches, peaches, apples, grapes, pears, plums, persimmons, strawberries, raspberries, medlars, apricots, carrots, pumpkins, kale, tomatoes, broccoli, beets, etc. Finally, a particular embodiment of the present invention is a packaged food product as defined in any of the preceding paragraphs, characterised in that it is presented packaged in Doypack^{®} packaging.

### Detailed description of the invention

Through extensive experimentation, it has been possible to develop a method for obtaining packaged fruit and/or vegetable products with the consistency of juice or purée or cream or fruit purée with improved nutritional and organoleptic properties which have a minimum durability of two years, which enables it to be used, by fulfilling suitable aseptic and sensory conditions, in remote places in order to combat famine or undernutrition of disadvantaged populations.

The products obtained through the method of the present invention are useful for the consumption thereof in populations comprising from children from of 3 years of age to adults of any age. The food products obtained are natural fruit and/or vegetable products in the form of or with the consistency of juice or purée or cream or fruit purée with high nutritional power.

They are packaged products which maintain the nutritional and organoleptic properties of natural fruits and vegetables, which optionally can be improved, enriched or functionalised through the incorporation of other functional ingredients or nutrients and/or mixtures thereof, selected from the group comprising: vegetable and/or animal proteins, dairy products, vegetable fibres, sugars, micronutrients or vitamins. They are products which are free of chemical preservatives, additives or dyes.

Non-limiting examples of fruits and/or vegetables which can be used for the purposes of the present invention are: flat peaches, peaches, apples, grapes, pears, plums, persimmons, strawberries, raspberries, medlars, apricots, carrots, pumpkins, kale, tomatoes, broccoli, beets, etc.

In general terms, the amount of fruit and/or vegetable comprises between 70-95 % by weight with respect to the weight of the final product. Preferably, the proportion of fruit and/or vegetable in the final product is between 75-90 %, more preferably, between 80-85 %.

Optionally, the formulation of the fruit and/or vegetable product of the present invention may additionally comprise other nutrients, such as vegetable proteins, selected from the group consisting of: grains, soy and pea, as well as mixtures thereof, dairy products, such as whole powdered milk, sugars, selected from the group consisting of: white sugar and grape concentrate, micronutrients, such as encapsulated iron and vitamins, selected from the group consisting of: vitamin A, E, C, B1, B2, B3, B9, B9, B12, B8, B5.

In general terms, the final product comprises vegetable protein in an amount between 0-10 % by weight with respect to the weight of the final product. Preferably, said amount is between 4-8 % by weight. The product can also include dairy products in an amount between 0-20 % by weight with respect to the weight of the final product, more preferably said amount is between 2-10 % by weight. The product can also include sugars in an amount from 0-8 % by weight with respect to the weight of the final product, more preferably, between 4-5 % by weight. The product can also include vegetable fibres in an amount between 0-8 %, preferably, 1.4-1.9 %. The product may also include a vitamin complex in an amount of 0.3 % by weight (0.3 grams per 100 grams of product). This amount translates to 7.5 % of the recommended daily amount of all vitamins which are included. These vitamins include: vitamin A (60 µg), vitamin E (0.9 mg), vitamin C (6.0 mg), thiamine (0.08 mg), riboflavin (0.11 mg), niacin (1.2 mg), vitamin B6 (0.11 mg), folic acid (15.0 µg), vitamin B12 (0.19 µg), biotin (3.75 µg), pantothenic acid mg). The product could also include 50 % of the recommended daily amount of iron per serving, which translates to 7 mg of iron per 100 grams of finished product.

The food products described in the present invention are presented in liquid or solid form with different textures, in the form of cream, purée, bound soup, or fruit purée, and are designed for oral administration.

Regarding the method for obtaining the products of the present invention, it is characterised in that it comprises two phases, the first phase consisting of obtaining a fruit and/or vegetable product in liquid or solid form with different textures, such as cream, purée, bound soup, or fruit purée and the second phase consisting of obtaining a packaged product, which comprises the fruit and/or vegetable product obtained in the first phase, optionally functionalised, with improved nutritional and organoleptic properties and a minimum durability of 2 years at room temperature.

The first phase of the process is carried out in a common fresh fruit processing plant/installation and comprises the following steps
a) Washing the fruits and/or vegetables in the natural state thereof in a basin or by means of showers. The vegetables and/or fruits arrive in pallets and/or boxes from the field or preservation chambers and enter the production process of the plant through an automatic pallet turner and/or forklift turners to a review belt wherein contaminants that may come in the pallets/boxes such as rocks, leaves, branches and others are sifted out. After that sifting, they pass to a basin with water and an elevator with pressurised showers which wash the fruit/vegetables and unload it on the selection belt.
b) Selecting the fruits and/or vegetables washed in the previous step. On the selection belt, the fruits/vegetables which meet the quality requirements are sifted out and those which do not are diverted to other processes. Although the general rule is to discard rotten pieces, the quality requirements vary depending on the specific species being processed (e.g., diseases such as rust, thrips, pseudopox; signs of a poor state such as a scar, impacts; the use that will be given to the cream as biological, conventional, baby food, etc.). The pieces that are not included in the process are diverted for manufacturing livestock feed.
c) Washing the fruits and/or vegetables selected in the previous step on a conveyor belt. The fruits/vegetables to be processed are washed by means of showers with pressurised water and/or rollers.
d) Pitting and pulping the fruits and/or vegetables after washing. Depending on the fruit/vegetables, they pass to the area for pitting by torsion or blades or pulping, wherein the separation of the pulp from other waste such as seeds, peels and others is achieved, all with the aim of subsequently passing the pulp-seed through a mesh.
e) Crushing the fruit and/or vegetable until a homogeneous mixture of product formed by fruit and/or vegetable is obtained in the form of a liquid, cream, purée or fruit purée, with variable texture and consistency. The crushing is performed in the vats equipped with mixing/crushing rollers provided with hammers.
f) After crushing, the homogeneous mixture is subjected to sieving by means of a stainless mesh filter (0.5-1.5 mm) provided in the installation, in order to remove unwanted particles and ensure uniformity of the homogeneous mixture of fruit and/or vegetable.
g) Cooking the homogeneous mixture of fruits and/or vegetables at 95-105 °C in the heating section for the enzymatic deactivation thereof. Once the mixing process is complete, the product is transported to the heating section, wherein the temperature is increased to 95-105 °C for enzymatic deactivation, through a scraped surface heat exchanger system.
h) Deaerating the homogeneous mixture of fruits and/or vegetables by vacuum stirring at -0.3-0.6 bar and transporting it to the heating section. The deaeration process is performed in the mixing tank with the aim of eliminating the oxygen present in the homogeneous mixture, since it could act on the tannins, essential oils and lipids, causing changes in taste and colour, in addition to causing vitamin C loss. In this manner, the proliferation of microorganisms is also avoided.
i) Next, in the heating section, the homogeneous mixture of fruits and/or vegetables is pasteurised at a temperature of 98-113 °C and the product is stored in drums for subsequent processing in the second phase of the method.

The second phase of the process is carried out in a clean room next to the previous installation and comprises the following steps:
j) The product obtained in the first phase of the process of the present invention is transferred in drums to the clean room and poured into tanks intended for preparing mixtures and provided with stirring and mixing devices. In this step, the product obtained in step i) is added to and mixed with an antioxidant, such as ascorbic acid in a proportion of 0.06 grams per 100 grams of finished product, and optionally, the product is functionalised by adding and mixing it with other functional ingredients for each specific formulation. The mixture is preheated to a temperature of 35-50 °C through steam jackets provided in the mixing tank and stirred at about 2,500 rpm (RPM), until a homogeneous mixture of fruits and/or vegetables is obtained which is optionally functionalised with other ingredients.
k) Transferring the product obtained in step j), homogeneous mixture of fruits and/or vegetables, optionally functionalised, from the mixture preparation tanks to the packaging and closing area through a closed tubular installation or tunnel wherein the room temperature is maintained controlled at a temperature between 95 °C +/- 3 °C by means of a heat exchanger provided in the tubular installation, and it is constantly homogenised with a built-in homogeniser at 150-200 bars in order to maintain a uniform texture. This tubular installation connects the mixture preparation tanks to the packaging and closing area, preventing the fruit and/or vegetable mixture from coming into contact with room temperature or any other temperature other than a temperature between 95 °C +/- 3 °C.
l) Once in the packaging area of the tubular installation or tunnel, the product is hot packaged at a temperature between 95 °C +/- 3 °C in a horizontal packaging device provided in the tubular installation, in order to remove the oxygen from the product and decrease pasteurisation time once it has been packaged. The packaging step may comprise forming a packaging, filling it with the product and sealing the packaging.
m) After leaving the packaging machine, the packaged product is then pasteurised, using a fire tube steam exchanger at a temperature of 95 °C for 5-7 minutes, provided on the maintenance, pasteurisation and cooling belt of the clean room.
n) Once the previous phase has ended, the product is cooled down to around 30 °C by means of water showers provided afterwards on the maintenance, pasteurisation and cooling belt of the clean room. After the last cooling step, the product reaches 13 °C. The tubular installation or tunnel has two shower circuits at different temperatures: first step at 20-35 °C and second step at 7-15 °C, the time will be, depending on the recipe, between 7 and 15 minutes per cooling step. The parameters to be controlled in this step are, on the one hand, the temperature of the product, which is carried out through the verification of the correct operation of the temperature probes and, on the other hand, the speed of the belt of the tunnel which must be controlled, which will mark the duration of how long the product stays in the cooling step.
o) Finally, the final product is dried, arranged in boxes and stored in the area enabled to this end. At the outlet of the cooling tunnel, the drying is performed using different turbines: the first turbine using a 4.00 metre straight diffuser at the outlet of the tunnel and the rest of the turbines in a dryer for packages by cables with straight nozzles oriented at different angles in order to guarantee the drying of the entire packaging, directly impacting the bottom thereof. At the outlet of the dryer, it would enter the packing area through an automatic system with a box former and a robotic packer, sealing and labelling the box once the process has ended and palletising with an anthropomorphic robot; after the automatic wrapping of the pallet, the finished pallet is received and properly labelled. The tiles on the pallet as well as the height will depend on the box format and type of product.

The method for obtaining the products according to the present invention is characterised in that once the final product to be packaged has been obtained, the transfer thereof to the packaging area and the packaging process occur at a controlled room temperature of 95 °C +/- 3 °C equal to the temperature reached by the product in the tubular installation. This means, from when the mixture to be packaged is obtained to the conclusion of the packaging process, the temperature of the product is maintained in a controlled manner at 95 °C +/- 3 °C. This feature of the process of the present invention causes substantial advantages in the final product, increasing stability and durability of the product while maintaining the nutritional and organoleptic properties of the natural fruits and vegetables.

This process is further characterised in that, optionally, in step j) the homogeneous mixture of fruits and/or vegetables can be functionalised, enriched or improved. To this end, the following can be added: vegetable protein, powdered milk, sugar, micronutrients, vitamins, etc., after which the pH of the mixture is adjusted between 3-5, preferably, 3.7-4.1, by means of adding citric acid monohydrate.

Likewise, as mentioned in step i), the product, homogeneous mixture of fruits and/or vegetables, is subjected to a pasteurisation process, which preferably can be performed by means of a tubular heat exchanger which reaches a temperature of between 98-113 °C, with subsequent cooling below 30 °C and aseptic packaging such that the product obtained in i) can be stored for 15 to 36 months depending on the type of packaging and product, in order to not perform the second phase of the process immediately. In other words, the present invention optionally envisages that the first and second phases can be performed discontinuously, if desired.

Regarding the packaging of the product, the possibility of selecting a type of packaging suitable for the circumstances of use is envisaged, among which the following are included: flexible bag-type packaging, plastic packaging, etc.

Preferably, the use of plastic packaging is envisaged, such as "Doypack^{®}" bags, (a bag which enables the product to be displayed vertically on itself, in other words, a bag with a wide or flat bottom which is maintained in a vertical position) which will serve as a packaging unit and which is formed, filled and heat sealed inside the tubular installation or tunnel through a horizontal packaging system. The packaging process in this case repeats the previously detailed steps and does not interrupt the pasteurisation temperature reached in step i). In such case, the process envisages the arrangement of temperature control devices at the inlet of the packaging system which measure the temperature of the packaging in order to recirculate the packaged product when it has undergone temperature drops with respect to the 95 °C +/- 3 °C index.

At this point the packaging circulates between two plates wherein they are individually subjected to mechanical pressure at an average height thereof, during a certain time to check if such pressure is maintained and to verify the state of the welds by rejecting any packaging whose welds give way. The pressure exerted on the packaging causes an opening of the base of the "Doypack^{®}" packaging, which leaves the surface thereof exposed on which compressed air is projected in order to ensure the drying thereof and prevent the proliferation of bacteria and moulds while maintaining a temperature below 30 °C.

The production process has a recirculation system in order to ensure in-line pasteurisation when temperatures lower than the one desired are detected in some sector of the circuit and/or for rejection in order to eliminate the product which does not meet the fixed standard, either before or after packaging.

The durability of the product can be extended up to 5 years of useful life, thanks to the heat treatment and the packaging method. The only thing that reduces the expiration of the product is the organoleptic deterioration thereof, due to the migrations of particles of the film making up the packaging.

To that end, the packaging methodology produced at high temperatures and with a nozzle which is introduced directly into the packaging formed simultaneously causes the product not to come into contact with the air at any time, while the packaging is sterilised instantly when coming into contact with the product at 95 ± 3 °C. Thanks to this fact, the durability of the product increases considerably.

All the stability tests performed on the products according to the present invention have tested positive for product stability, which translates into high food safety.

### Examples:

### Example 1: Making fruit cream with milk

The exact formulation of the product called milk fruit consists of 85 % strawberry fruit purée, 10 % powdered milk, 4.44 % sugar, 0.5 % citric acid and 0.06 % ascorbic acid. The steps to follow from the beginning of the production process comprise: Receiving the strawberries on plates which are dumped into the dumping line. Strawberries with advanced signs of rotting are discarded and intended for producing animal feed, while the others continue forward on the line, going through showers with tap water where they are washed. Strawberries are fruits without pits, so they go directly to the crushing line, wherein a roller crusher with hammers crushes the fruits by mechanical force. The crushed strawberries are collected through pipes in order to be transported to the cooker. The strawberry cream is passed through a cooker wherein the temperature is raised to 95 °C with the aim of enzymatically deactivating the fruit. This cooker has sieves, the first one 3 mm and the second one 1.5 mm, through which the strawberries pass until completely homogeneous. After this, deaeration is carried out under a pressure of 0.38 bar, in order to eliminate the oxygen and prevent the proliferation of microorganisms. The strawberries are transported by the same network of pipes to the heating area. The pasteurisation temperature and time will depend on the production flow (L/h). For example, for a production flow of 11,000 litres per hour, the minimum maintenance outlet temperature will be 93.99 °C for 0.84 minutes. In order to ensure complete pasteurisation, the temperature is maintained at 95 °C for 1 minute, and then it is sent to the filler. This sending causes the cream to cool to 40 °C. The filler packages the strawberries in aseptic bags at 40 °C, which are introduced into drums. Approximately, 210 kg (net weight) of strawberries are filled per drum. If necessary, these drums are stored in refrigeration chambers to be used later, with a durability of 18 months. For a production of 1,000 kg of Fruit-Milk, 850 kg of strawberry cream are required, which will be introduced by suction into one of the tanks. Likewise, 100 kg of powdered milk, 44.4 kg of sugar, 5 kg of citric acid and 0.6 kg of ascorbic acid are added (all manually), while stirring at 2,500 rpm and heated to 40 °C. Once it is verified that all the physical-chemical parameters correspond to those tabulated in the technical data sheet (pH 3.9-4.1, °BRIX 23-26 and a consistency of 10-13 Bostwick), the mixture passes on to the pipe network, which increases the temperature to 97 °C while it passes through a homogeniser at 200 bar. This process takes 15 minutes. Once the programmed temperature has been reached, it passes on to the filler, which simultaneously forms the packaging with the Doypack^{®} shape. The filling is done at 93 °C at a rate of 45 units of packaging per minute. In order to ensure the complete pasteurisation of the product, the finished packaging is maintained at this temperature for 7 minutes by means of a maintenance tunnel with water showers. After this time, the packaging is cooled in two steps: the first step, with recirculated tap water, to 30 °C, and the second, with cold tap water, to 13 °C. The total cooling process is 30 minutes long. When the packaging comes out of the maintenance tunnel, it goes through the dryer and the units are then boxed and stored.

### Example 2: Product durability test

The stability test for the Fruit Mix with batch MFV2319 was carried out in the following manner:
A) 5 samples are incubated at 32 °C for 7 days and the pH thereof is measured against a control sample (3.91) and the value thereof (3.93) is noted. Since the difference between this value and that of the control is less than 0.5, it continues to the next step.
B) 5 other samples are incubated at 32 °C for 21 days and the pH thereof is measured against a control sample (3.94) and the value thereof (3.92) is noted. Since the difference between this value and that of the control is less than 0.5, it is deduced that the colony formation is <100 and it is declared as a stable product.

This stability translates into up to 5 years of useful life.

### Example 3: Comparative durability test against a product not obtained through the method of the invention

A) Processed fruit cream which is packaged at room temperature (25±3 °C) in order to take advantage of the very micronutrients of the fruit. Shelf life test: 5 samples are incubated at 32 °C for 7 days and the pH thereof is measured against a control sample (3.80) and the value thereof (3.53) is noted. Since the difference between this value and that of the control is less than 0.5, it continues to the next step.
   5 other samples are incubated at 32 °C for 21 days and the pH thereof is measured against a control sample (3.83) and the value thereof (3.10) is noted. Since the difference between this value and that of the control is greater than 0.5, it is deduced that there has been microbiological proliferation.
   In order to evaluate the exact useful life of this product, a sample (without incubating) is analysed every day against a fresh control, valuing the physical and chemical properties thereof. After 36 days, there is an abrupt change in these properties.
B) Fruit cream functionalised with grain protein packaged at 95 ± 3 °C. Shelf life test: 5 samples are incubated at 32 °C for 7 days and the pH thereof is measured against a control sample (4.03) and the value thereof (4.06) is noted. Since the difference between this value and that of the control is less than 0.5, it continues to the next step.
   5 other samples are incubated at 32 °C for 21 days and the pH thereof is measured against a control sample (4.02) and the value thereof (4.03) is noted. Since the difference between this value and that of the control is greater than 0.5, it is declared as microbiologically stable.
   It is deduced that the exact conditions of the process are those which lead to a high durability of the product.

## Claims

1. A method for obtaining a fruit and/or vegetable-based food product **characterised in that** it comprises the following steps:
a) Washing the fruit and/or vegetable.
b) Selecting the fruit and/or vegetable.
c) Washing on a conveyor belt.
d) Pitting and pulping.
e) Crushing the fruit and/or vegetable until a homogeneous mixture of product formed by fruit and/or vegetable is obtained, in the form of a liquid, cream, purée or fruit purée, with variable texture and consistency.
f) Sieving the homogeneous mixture obtained in the previous step by means of a stainless mesh filter (0.5-1.5 mm).
g) Enzymatic deactivation of the homogeneous mixture from the previous step through cooking at a temperature of 95-105 °C.
h) Deaerating the mixture by vacuum stirring at -0.3-0.6 bar.
i) Pasteurising the mixture at a temperature of 98-113 °C.
j) Mixing and stirring the product obtained in step i) with the addition of an antioxidant and optionally other functional ingredients for each specific formulation, in the mixture preparation tanks.
k) Transferring the homogeneous fruit and/or vegetable mixture, optionally functionalised as obtained in step j), from the mixture preparation tanks to the packaging and closing area, through a closed tubular installation or tunnel wherein the room temperature is maintained controlled between 95 °C +/- 3 °C.
l) Packaging the product in the packaging and closing area at a room temperature of between 95 °C +/- 3 °C.
m) Pasteurising the packaged product at a temperature of 95 °C for 5-7 minutes.
n) Cooling the product; and
o) Drying and storing the final product.

2. The method according to claim 1, **characterised in that** in step j), the mixture is preheated to a temperature of 35-50 °C through steam jackets provided in the mixing tank.

3. The method according to any of claims 1 or 2, **characterised in that** in step j), the mixture is stirred at about 2,500 rpm in a vacuum at a pressure of 150-200 bar.

4. The method according to any of the preceding claims, **characterised in that** in step j) ascorbic acid is added as an antioxidant in a proportion of 0.06 % by weight, 0.06 grams of ascorbic acid per 100 grams of final product.

5. The method according to any of the preceding claims, **characterised in that** in step j) other functional ingredients and/or mixtures thereof are added, selected from the group comprising: vegetable and/or animal proteins, dairy products, vegetable fibres, sugars, micronutrients or vitamins.

6. The method according to any of the preceding claims, **characterised in that** in step k) the tubular installation connects the mixture preparation tanks to the packaging and closing area, preventing the fruit and/or vegetable mixture from coming into contact with room temperature or any other temperature other than a temperature between 95 °C +/- 3 °C.

7. A packaged fruit and/or vegetable-based food product comprising between 75-90 % by weight of fruit and/or vegetable with respect to the total weight of the product and optionally other functional ingredients and/or mixtures thereof, selected from the group comprising: vegetable and/or animal proteins, dairy products, vegetable fibres, sugars, micronutrients or vitamins.

8. The food product according to claim 7, **characterised in that** it comprises in % by weight with respect to the total weight of the product:
0-10 % vegetable protein
0-20 % dairy product
0-8 % sugars; and
0-2 % vegetable fibres.

9. The food product according to any of claims 7-8, **characterised in that** it is presented in a form adapted for oral administration.

10. The food product according to claim 9, which is presented in a form selected from the group comprising: cream, purée, bound soup and fruit purée.

11. The food product according to any of claims 7-10, **characterised in that** the fruits and/or vegetables can be selected from the group comprising: flat peaches, peaches, apples, grapes, pears, plums, persimmons, strawberries, raspberries, medlars, apricots, carrots, pumpkins, kale, tomatoes, broccoli, beets, etc.

12. The food product according to any of claims 7-11, **characterised in that** it is packaged in Doypack^{®} packaging.
